# EUROPEAN PATENT SPECIFICATION

(11) **EP 2 814 072 B1**
(45) Date of publication and mention of the grant of the patent: **25.01.2017**
(21) Application number: 14171841.1
(22) Date of filing: 10.06.2014
(51) Int. Cl.: H01L 33/50, C09K 11/77, H01L 33/06, H01L 33/10, C01F 17/00, F21K 99/00

(54) **LIGHT-EMITTING DEVICE**
LICHTEMITTIERENDE VORRICHTUNG
DISPOSITIF ÉLECTROLUMINESCENT

(30) Priority: 12.06.2013 JP 2013123688
(43) Date of publication of application: 17.12.2014
(73) Proprietor: Shin-Etsu Chemical Co., Ltd., Chiyoda-ku, Tokyo (JP)
(72) Inventor: Wataya, Kazuhiro, Echizen-shi, Fukui (JP); Tsukatani, Toshihiko, Echizen-shi, Fukui (JP); Tanaka, Shintaro, Echizen-shi,, Fukui (JP)
(74) Representative: Stoner, Gerard Patrick

(56) References cited:
- EP-A1- 2 395 065
- EP-A2- 2 474 589
- WO-A1-03/102113
- WO-A2-2008/136619
- DE-U1- 20 308 495
- US-A1- 2011 050 086
- US-A1- 2011 254 435

## Description

### TECHNICAL FIELD

This invention relates to light-emitting devices such as general purpose illuminating devices, backlight sources and headlight sources, and more particularly to light-emitting devices comprising a laser light source as an excitation light source and a phosphor capable of converting the wavelength of laser light from the light source.

### BACKGROUND

Light-emitting diodes (LEDs) belong to a class of the most efficient light sources among currently available light sources. In particular, white LEDs find a rapidly expanding share in the market as the next-generation light source to replace incandescent lamps, fluorescent lamps, cold cathode fluorescent lamps (CCFL), and halogen lamps. The white LEDs are arrived at by combining a blue LED with a phosphor capable of emission upon blue light excitation. In the current mainstream industry, yellow light-emitting phosphors are combined with blue LEDs to produce pseudo-white light. Examples of suitable yellow light-emitting phosphors include Y₃Al₅O₁₂:Ce, (Y,Gd)₃(Al,Ga)₅O₁₂:Ce, (Y, Gd)₃Al₅O₁₂:Ce, Tb₃Al₅O₁₂:Ce, CaGa₂S₄:Eu, (Sr,Ca,Ba)₂SiO₄:Eu, and Ca- -SiAlON:Eu.

Recently great efforts are made on the study of light-emitting devices using a laser diode (LD) as the light source because a phosphor emitter section can be located remote from the LD so that the thermal and optical considerations of luminaires are easy. With respect to automotive headlamps, for example, illuminators using high power LD rather than LED have been reported.

However, the light-emitting devices including illuminators using LD as the light source have some problems. One problem is that the coherence of laser light gives rise to speckle noise. Although attempts to reduce coherence are made, there are yet available no light-emitting devices in which speckle noise is reduced to a sufficient level to give no strange sense to eyesight when emission light is illuminated.

### Citation List

- Patent Document 1:: JP-A 2012-153879 (US 20120175658, EP 2474589)
- Non-Patent Document 1:: Y. Ikeda, "Large Light Quantity Illuminating Light Source Using a Plurality of LDs and Phosphor," the 348th Meeting Technical Digest of Phosphor Research Society, p15-22, 2013, Phosphor Research Society

US 2011/0050086 A1 discloses halosilicate phosphors capable of emitting visible light.

EP 2395065 A1 discloses phosphor particles of generally spherical shape having an average particle diameter of 5-50 µm and an average roundness of up to 0.3.

WO 03/102113 A1 discloses luminescent powder comprising luminescent particles comprising primary particles which may consist of an yttrium-garnet doped with cerium. The luminescent particles comprise pores.

WO 2008/136619 A2 discloses a light-emitting device comprising a laser diode and a light emitting material. The light emitting device may be used for long-distance illumination and flash.

US 2011/0254435 discloses phosphors containing garnet fluorescent material activated with cerium.

DE 20308495 U1 discloses a conversion light emitting diode which contains a fluorescent material with mean particle size d50 of 0.1-1.5 microns.

### THE INVENTION

An object of the invention is to provide a light-emitting device using laser light as excitation light and a phosphor adapted to convert wavelength of the excitation light and to generate light of converted wavelength, which produces illuminating light of quality in that the speckle noise that gives a glare or strange sense to eyesight when the light is illuminated to a rough surface is reduced.

With respect to a light-emitting device using laser light as excitation light and a phosphor adapted to convert wavelength of the excitation light and to generate light of converted wavelength, the inventors have found that better results are obtained when polycrystalline secondary particles each consisting of a plurality of primary particles and containing therein pores with a diameter of at least 0.2 µm are used as the phosphor. That is, the scattering efficiency of the excitation light is improved to reduce speckle noise whereby light of quality is illuminated.

Accordingly, the invention provides a light-emitting device comprising an excitation light source capable of emitting laser light as excitation light and a phosphor adapted to be excited with the laser light, to convert wavelength of the excitation light and to generate light of converted wavelength. The phosphor is in the form of polycrystalline secondary particles each consisting of a plurality of primary particles and containing therein pores with a diameter of at least 0.2 µm.

Preferably the phosphor comprises a garnet phase of the compositional formula (1):

(A₁₋ₓBₓ)₃C₅O₁₂ (1)

wherein A is at least one rare earth element selected from Y, Gd, and Lu, B is at least one rare earth element selected from Ce, Nd, and Tb, C is at least one element selected from Al and Ga, and x is a number of 0.002 to 0.2.

Preferably the laser light is blue laser light having a wavelength of 440 to 465 nm.

Preferably the primary particles have an average particle size of 0.1 to 5 µm.

Preferably, the diameter of the pores is equal to or less than ½ of the diameter of the secondary particles.

Preferably, the secondary particles have an average particle size of 5 to 50 µm.

A method of making the device, optionally including making the phosphor by a method disclosed herein, is a further aspect. Phosphor particles obtainable by the method are a further aspect.

### ADVANTAGEOUS EFFECTS

The light-emitting device using laser light as excitation light and a phosphor adapted to convert wavelength of the excitation light and to generate light of converted wavelength as proposed herein can produce light of quality, in that speckle noise (that gives a glare or strange sense to eyesight when the light is illuminated onto a rough surface) is reduced. Light of quality having an improved speckle contrast is illuminated.

### BRIEF DESCRIPTION OF DRAWINGS

FIG. 1 is a photomicrograph in one cross section of a phosphor particle in Example 1.
FIG. 2 is a photomicrograph in another cross section of a phosphor particle in Example 1.
FIG. 3 is a photomicrograph in cross section of a phosphor particle in Comparative Example 1.

### FURTHER EXPLANATIONS; OPTIONS AND PREFERENCES

As used herein, the term "phosphor" refers to a fluorescent substance. The terms "particles" and "powder" are equivalent in that the powder is a grouping of particles.

One embodiment of the invention is a light-emitting device comprising a light source capable of emitting laser light as excitation light and a phosphor adapted to be excited with the laser light, to convert wavelength of the excitation light and to generate light of converted wavelength.

In the light-emitting device, polycrystalline secondary particles each consisting of a plurality of primary particles are used as the phosphor. The secondary particles have pores in their interior, desirably with a diameter of at least 0.2 µm, preferably at least 0.5 µm. With pores present within the secondary particle, light incident on the interfaces between the pores and the particle body or crystal is repeatedly reflected by the interfaces. As a result, even when laser light is used as the excitation light, the coherence of laser excitation light that affects speckle noise is reduced, that is, incoherence is improved. If the diameter of pores is less than 0.2 µm, the effect of reducing speckle noise is not obtainable. This is because no sufficient scattering of input light takes place. The upper limit of the diameter of pores is determined such that phosphor particles may become polycrystalline secondary particles each consisting of a plurality of primary particles. If the diameter of pores is too large, the scattering effect is degraded for such reasons as a reduced number of pores. Thus the diameter of pores is preferably equal to or less than 1/2 of the diameter of phosphor particles (exactly secondary particles), for example, equal to or less than 25 µm.

Preferably the phosphor particles (secondary particles) have an average particle size of 5 to 50 µm. Also preferably the primary particles have an average particle size of 0.1 to 5 µm. If the average particle size of primary particles is less than 0.1 µm, then the phosphor itself may have degraded properties. If the average particle size of primary particles exceeds 5 µm, then the effect of scattering laser light may be degraded. The average particle size of phosphor particles (secondary particles) is given as a particle size (or diameter) at cumulative 50% by volume, D50, measured by the laser diffraction method, and the average particle size of primary particles is given as an average of diameters of primary particles measured on a microscopic image.

The phosphor is preferably a phosphor comprising a garnet phase. It may have the compositional formula (1):

(A₁₋ₓBₓ)₃C₅O₁₂ (1)

wherein A is at least one rare earth element selected from the group consisting of yttrium (Y), gadolinium (Gd), and lutetium (Lu), B is at least one rare earth element selected from the group consisting of cerium (Ce), neodymium (Nd), and terbium (Tb), C is at least one element selected from the group consisting of aluminum (Al) and gallium (Ga), and x is a number of 0.002 to 0.2.

The garnet phase is the major phase in the phosphor particles. Preferably the garnet phase accounts for at least 99% by volume of the phosphor particle. If the proportion of garnet phase is low, the absorptance of excitation light and the quantum efficiency of emission may be reduced.

The preferable phosphor is a yellow light-emitting phosphor capable of emitting yellow light having the maximum intensity in a wavelength range of 540 to 590 nm, for example, when blue light is used as the excitation light. The phosphor may be used in combination with blue excitation light to construct a light-emitting device capable of emitting white (pseudo-white) light.

The phosphor particles in the form of polycrystalline secondary particles each consisting of a plurality of primary particles and containing pores therein may be prepared by the following method, for example.

First, the starting material is selected from single metal oxides, complex oxides, and oxide mixtures, depending on the metal species of the desired phosphor particles. The oxides are dispersed to form a slurry, which is atomized into granules. The granules are used as precursor.

The complex oxide or oxide mixture may be prepared by the following method, for example. First suitable ones are selected from metal salts (nitric acid salts or chloride salts) containing metal elements (e.g., Y, Gd, Lu, Ce, Nd, Tb, Al, Ga, etc.) that constitute the phosphor particles. An aqueous solution of the selected metal salts is formed, from which a co-precipitate is obtained. Alternatively, suitable ones are selected from the above-mentioned metal salts and metal oxides, an aqueous solution or slurry of the selected ones is formed, and a co-precipitate is obtained therefrom. The co-precipitate is fired in air at 800 to 1,500°C, yielding complex oxide or oxide mixture. The firing time is typically 1 to 10 hours.

If necessary, organic additives such as dispersant and binder may be added to the oxide slurry. If necessary, the slurry is milled to yield a slurry of fine particles having an average particle size of 0.01 to 2.0 µm. Using the spray drying method, this slurry as the starting material is shaped into particles of the desired particle size and of spherical or substantially spherical shape, obtaining granules (as precursor). Due to atomization from the slurry, the composition is uniform among individual granules. By controlling the conditions of drying atomized slurry, a powder of porous granules can be produced. The preferred conditions of drying atomized slurry include a slurry concentration of 5 to 20% by weight and a temperature of drying atmosphere which is 60-90°C higher than the boiling point of the solvent. Preferably the size of granules is substantially equal to the size of phosphor particles obtained after heat treatment, for example, the average particle size of granules is 100 to 120% of the size of phosphor particles after heat treatment.

Since the granules are merely agglomerates of fine particles compacted under pressure, they are then heat treated into sintered or monolithic particles serving as phosphor particles. As the heat treatment of granules into sintered or monolithic particles, the method of passing the granules through a gas burner flame (e.g., using propane) or a plasma for fusion is preferred. The plasma source used herein may be radio-frequency plasma or DC plasma. The heat treatment is such that the granules in entirety may be completely melted whereby monolithic particles are formed. Alternatively, only a surface portion of individual fine particles constituting agglomerates is melted such that fine particles are fused together, thus obtaining sintered particles each consisting of strongly bound fine particles. When granules atomized from the organic additive-containing slurry are heat treated, they are previously fired in air at 400 to 1,700°C for 1 to 10 hours to burn off the organic matter. When the once melted, cooled particles are further heat treated in a reducing atmosphere, H₂+N₂ gas or H₂+Ar gas may be used as the reducing gas. For the reducing treatment, the temperature is 1,000 to 1,800°C, for example, and the time is 1 to 20 hours, for example. The temperature and time in these ranges are sufficient to obtain phosphor particles with satisfactory properties. To prevent particles from fusing together during the heat treatment, the treatment may be multi-staged, for example, so as to include heat treatment at 1,200°C and subsequent heat treatment at 1,800°C.

The excitation light source for emitting laser light is preferably a laser diode (LD). Particularly when a yellow light-emitting phosphor capable of emitting yellow light upon excitation with blue light, typically a phosphor containing the garnet phase of compositional formula (1) defined above is used, blue laser light of wavelength 440 to 465 nm is preferred. Then a blue LD capable of emitting blue laser light may be used. Suitable LDs are commercially available.

In the light-emitting device of the invention, the excitation light source and the phosphor are arranged such that laser light from the excitation light source may enter the phosphor. The phosphor is arranged at a position where laser light reaches, for example, forward in the propagating direction of laser light, preferably as a luminous member having phosphor particles dispersed in a matrix material. The light-emitting device may be constructed using any well-known members included in light-emitting devices using light-emitting diode (LED), such as an LD-accommodating member, luminous member attaching member and reflector member.

The luminous member used herein preferably includes a matrix material such as resin or rubber and the phosphor. The resin used as the matrix material may be either thermoplastic or thermosetting.

The luminous member may be a molded body which is obtained by mixing the matrix material with the phosphor, dispersing and molding the material. Any of well-known molding methods such as compression molding, extrusion molding and injection molding may be used. The material may be molded to any desired shape such as particulate, bar, film or thin plate shape and any desired size, depending on the intended application, shape and illuminating mode of the light-emitting device. Typically the luminous member has a thickness of at least 0.1 mm, preferably at least 0.5 mm, and up to 20 mm, preferably up to 10 mm. The matrix material and the phosphor are mixed in any ratio as long as the molded body has the necessary strength. Although the ratio varies with the type of matrix material, the phosphor is typically mixed in an amount of up to 60%, preferably up to 40% by weight based on the weight of the matrix material. The lower limit amount of the phosphor is typically at least 1% by weight, though not critical.

### EXAMPLE

Examples are given below by way of illustration and not by way of limitation.

### Example 1

In a ball mill, 1,000 g of a garnet powder of (Y_{2.94}Ce_{0.06})Al₅O₁₂ having a purity of 99.9% and an average particle size of 1.0 µm was milled for 6 hours together with 6,000 g of deionized water, 10 g of ammonium polyacrylate, and 2 g of carboxymethyl cellulose. Using a centrifugal atomizer, the resulting slurry was atomized into granules. Atomization was carried out at a drying temperature of 180°C while the feed rate of the slurry was adjusted such that the drying temperature might not fluctuate. There were obtained granules having an average particle size of 21 µm. The granules were heat treated in air at 1,550°C for 2 hours to burn off the organic matter. The granules were then fed into a DC arc plasma where they were melted and then solidified again, recovering particles. The particles were annealed in a reducing atmosphere of 98 vol% of argon and 2 vol% of hydrogen at 1,400°C for 4 hours, yielding phosphor particles capable of emitting yellow light in response to blue exciting light.

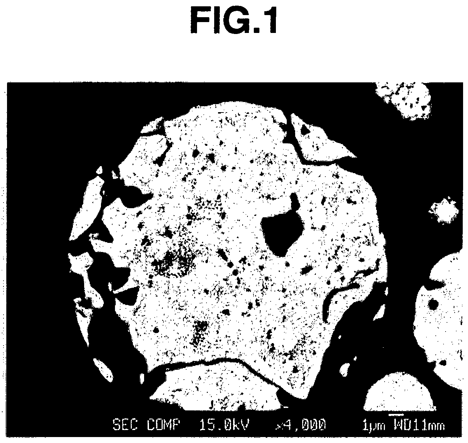

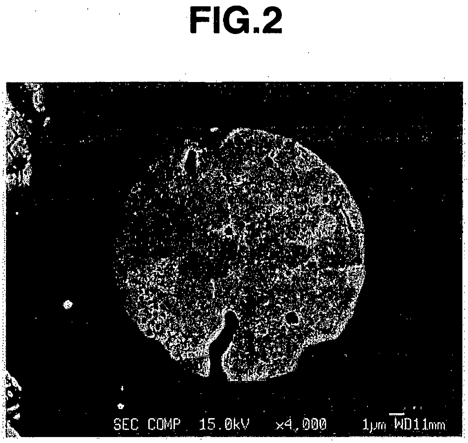

The phosphor particles thus obtained were qualitatively analyzed by XRD, finding that the particle consisted of a single garnet phase. The phosphor particles were observed under an electron microscope. As seen from the photomicrographs of FIGS. 1 and 2, the particle was of spherical or substantially spherical shape and had polycrystalline secondary particle structure. The average particle size of the secondary particles was determined by the laser diffraction method, and the average particle size of primary particles was determined as an average of 20 primary particles measured from an electron microscope image. An absorptance, internal quantum efficiency, and external quantum efficiency of the phosphor particles were measured over an emission wavelength range of 480 to 780 nm at an excitation wavelength of 450 nm using an integrating sphere. A phosphor particle was ground whereupon a cross section of the particle was observed. As seen from FIGS. 1 and 2, a multiplicity of pores having a diameter of at least 0.2 µm were distributed within the phosphor particle. The measurement results of the phosphor particles are shown in Tables 1 and 2.

Next, using the phosphor particles obtained, a light-emitting device operating on laser light as the excitation light was constructed. Specifically, a blue LD was used as the excitation light source. The blue LD was a blue laser of class 3B, emission wavelength 445 to 450 nm, and power 1,000 mW. The phosphor particles were dispersed in a transparent silicone resin in an amount of 5% by weight based on the resin. The resulting resin composition was molded and cured into a disk, which was used as a luminous member. An opaque frustoconical enclosure was furnished. The enclosure was provided with the blue LD in its small diameter opening and the luminous member in its large diameter opening such that light from the blue LD might reach the luminous member, completing the light-emitting device. The light-emitting device was operated to project light to a screen, which was visually observed to evaluate a speckle contrast.

### Comparative Example 1

A powder mixture, 1,000 g, was obtained by mixing a yttrium oxide powder of 99.9% purity having an average particle size of 1.0 µm, an aluminum oxide powder of 99.0% purity having an average particle size of 0.5 µm, and a cerium oxide powder of 99.9% purity having an average particle size of 0.2 µm in such amounts to give a molar ratio Y:Al:Ce of 2.94:5:0.06. Further 20 g of barium fluoride was added as flux to the powder mixture, which was thoroughly milled. The mixture was fed in an aluminum crucible and heat treated in air at 1,400°C for 5 hours. The fired body was disintegrated in water using a ball mill. This was followed by pickling, water washing, separation, drying and classification, obtaining phosphor particles.

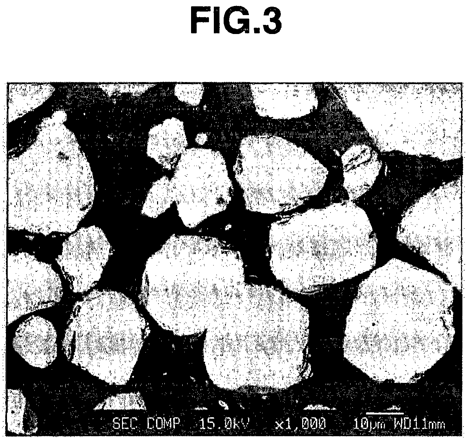

The phosphor particles thus obtained were qualitatively analyzed by XRD and found to contain a garnet phase as the major phase and a barium/aluminum complex oxide phase as the second phase. The phosphor particles were observed under an electron microscope. As seen from the photomicrograph of FIG. 3, the phosphor particles were of irregular shape and without polycrystalline secondary particle structure. An average particle size, absorptance, internal quantum efficiency, and external quantum efficiency of the phosphor particles were measured as in Example 1. Phosphor particles were ground whereupon a cross section of the particles was observed. As seen from FIG. 3, pores having a diameter of at least 0.2 µm were not distributed within any phosphor particles. The measurement results of the phosphor particles are shown in Tables 1 and 2.

Next, using the phosphor particles obtained, a light-emitting device was constructed as in Example 1. A speckle contrast was similarly evaluated.

**Table 1**

| | Crystal phase (major phase) on XRD analysis | Impurity phase on XRD analysis | Shape | Average particle size of secondary particles, | Average particle size of primary particles, |
|---|---|---|---|---|---|
| Example 1 | garnet phase | none | spherical | 18.4 | 0.90 |
| Comparative Example 1 | garnet phase | Ba/Al complex oxide phase | irregular | 19.3 | - |

**Table 2**

| | Absorptance | Internal quantum efficiency | External quantum efficiency | Pores of at least 0.2 µm |
|---|---|---|---|---|
| Example 1 | 0.93 | 0.96 | 0.89 | multiple |
| Comparative Example 1 | 0.88 | 0.90 | 0.79 | nil |

A comparison of speckle contrast between the devices of Example 1 and Comparative Example 1 showed that the device of Example 1 produced light of quality having a lower speckle noise or improved speckle contrast.

### Notes

For the avoidance of doubt it is confirmed that in the general description above, in the usual way the proposal of general preferences and options in respect of different features of the light-emitting device, method of making such device and of making a phosphor, constitutes the proposal of general combinations of those general preferences and options for the different features, insofar as they are combinable and compatible and are put forward in the same context.

In respect of numerical ranges disclosed in the present description it will of course be understood that in the normal way the technical criterion for the upper limit is different from the technical criterion for the lower limit, i.e. the upper and lower limits are intrinsically distinct proposals.

## Claims

1. A light-emitting device comprising an excitation light source capable of emitting laser light as excitation light and a phosphor adapted to be excited with the laser light, to convert wavelength of the excitation light and to generate light of converted wavelength, wherein
said phosphor is in the form of polycrystalline secondary particles,
each of the secondary particles consisting of a plurality of primary particles and each of the secondary particles having pores with a diameter of at least 0.2 µm in their interior.

2. The light-emitting device of claim 1 wherein said primary particles comprise a garnet phase of the compositional formula (1):
(A₁₋ₓBₓ)₃C₅O₁₂ (1)
wherein A is at least one rare earth element selected from Y, Gd and Lu, B is at least one rare earth element selected from Ce, Nd and Tb, C is at least one element selected from Al and Ga and x is from 0.002 to 0.2.

3. The light-emitting device of claim 2 wherein the laser light is blue laser light having a wavelength of 440 to 465 nm.

4. The light-emitting device of any one of claims 1 to 3 wherein the primary particles have an average particle size of 0.1 to 5 µm.

5. The light-emitting device of any one of the preceding claims wherein said phosphor secondary particles are particles obtainable by heat treating granules formed from the primary particles.

6. The light-emitting device of any one of the preceding claims wherein the diameter of the pores is equal to or less than 1/2 of the diameter of the secondary particles.

7. The light-emitting device of any one of the preceding claims wherein the secondary particles have an average particle size of 5 to 50 µm.

## Patentansprüche

1. Licht emittierende Vorrichtung, umfassend eine Anregungslichtquelle, die in der Lage ist, Laserlicht als Anregungslicht zu emittieren, und einen Luminophor, der geeignet ist, mit dem Laserlicht angeregt zu werden, die Wellenlänge des Anregungslichts umzuwandeln und Licht der umgewandelten Wellenlänge zu erzeugen, worin
der Luminophor in der Form von polykristallinen Sekundärteilchen ist,
jedes der Sekundärteilchen aus einer Vielzahl an Primärteilchen besteht und jedes der Sekundärteilchen Poren mit einem Durchmesser von zumindest 0,2 µm im Inneren hat.

2. Licht emittierende Vorrichtung nach Anspruch 1, worin die Primärteilchen eine Granatphase der Zusammensetzungsformel (1):
(A₁₋ₓBₓ)₃C₅O₁₂ (1)
umfassen, worin A zumindest ein Seltenerdelement ausgewählt aus Y, Gd und Lu ist, B zumindest ein Seltenerdelement ausgewählt aus Ce, Nd und Tb ist, C zumindest ein Element ausgewählt aus A1 und Ga ist und x von 0,002 bis 0,2 ist.

3. Licht emittierende Vorrichtung nach Anspruch 2, worin das Laserlicht blaues Laserlicht mit einer Wellenlänge von 440 bis 465 nm ist.

4. Licht emittierende Vorrichtung nach einem der Ansprüche 1 bis 3, worin die Primärteilchen eine mittlere Teilchengröße von 0,1 bis 5 µm haben.

5. Licht emittierende Vorrichtung nach einem der vorangegangenen Ansprüche, worin die Luminophor-Sekundärteilchen Teilchen sind, die durch Hitzebehandlung von Granulaten, die aus den Primärteilchen gebildet wurden, erhältlich sind.

6. Licht emittierende Vorrichtung nach einem der vorangegangenen Ansprüche, worin der Durchmesser der Poren gleich oder weniger als die ½ des Durchmessers der Sekundärteilchen ist.

7. Licht emittierende Vorrichtung nach einem der vorangegangenen Ansprüche, worin die Sekundärteilchen eine mittlere Teilchengröße von 5 bis 50 µm aufweisen.

## Revendications

1. Dispositif électroluminescent comprenant une source lumineuse d'excitation capable d'émettre une lumière laser comme lumière d'excitation et un luminophore adapté pour être excité à l'aide de la lumière laser, destiné à convertir la longueur d'onde de la lumière d'excitation et générer une lumière ayant une longueur d'onde convertie, dans lequel
ledit luminophore se présente sous la forme de particules secondaires polycristallines,
chacune des particules secondaires est constituée d'une pluralité de particules primaires, et chacune des particules secondaires a des pores d'un diamètre d'au moins 0,2 µm dans leur intérieur.

2. Dispositif électroluminescent selon la revendication 1, dans lequel lesdites particules primaires comprennent une phase grenat ayant la formule de composition (1) :
(A₁₋ₓBₓ)₃C₅O₁₂ (1)
où A est au moins un élément de terres rares choisi parmi Y, Gd et Lu, B est au moins un élément de terres rares choisi parmi Ce, Nd et Tb, C est au moins un élément choisi parmi Al et Ga, et x est compris entre 0,002 à 0,2.

3. Dispositif électroluminescent selon la revendication 2, dans lequel la lumière laser est une lumière laser bleue ayant une longueur d'onde comprise entre 440 et 465 nm.

4. Dispositif électroluminescent selon l'une quelconque des revendications 1 à 3, dans lequel les particules primaires ont une taille moyenne de particule comprise entre 0,1 et 5 µm.

5. Dispositif électroluminescent selon l'une quelconque des revendications précédentes, dans lequel lesdites particules secondaires de luminophore sont des particules pouvant être obtenues par traitement thermique de granules formés à partir des particules primaires.

6. Dispositif électroluminescent selon l'une quelconque des revendications précédentes, dans lequel le diamètre des pores est égal ou inférieur à 1/2 le diamètre des particules secondaires.

7. Dispositif électroluminescent selon l'une quelconque des revendications précédentes, dans lequel les particules secondaires ont une taille moyenne de particule comprise entre 5 et 50 µm.
